# EUROPÄISCHE PATENTSCHRIFT

(11) **EP 2 682 535 B1**
(45) Veröffentlichungstag und Bekanntmachung des Hinweises auf die Patenterteilung: **14.12.2016**
(21) Anmeldenummer: 13171830.6
(22) Anmeldetag: 13.06.2013
(51) Int. Cl.: E03F 3/04, F16L 1/036, F16L 21/03, F16L 25/00, F16J 15/12

(54) **Rohrverbindung mit verstärktem Dichtungsring**
Pipe joint with reinforced sealing ring
Raccord de tuyaux avec bague d'étanchéité renforcée

(30) Priorität: 04.07.2012 DE 202012102467 U
(43) Veröffentlichungstag der Anmeldung: 08.01.2014
(73) Patentinhaber: Theodor Cordes GmbH & Co. KG, 48308 Senden-Bösensell (DE)
(72) Erfinder: Schlautmann, Frank, 48167 Münster (DE)
(74) Vertreter: Habbel, Ludwig

(56) Entgegenhaltungen:
- EP-A1- 1 887 271
- EP-A2- 0 896 173
- CH-A- 371 932
- DE-A1- 3 512 970
- DE-A1- 10 204 748
- GB-A- 2 247 927
- US-A- 4 368 894
- US-A1- 2010 270 753

## Beschreibung

Die Erfindung betrifft eine Rohrverbindung nach dem Oberbegriff des Anspruchs 1.

Gattungsgemäße Rohrverbindungen werden beispielsweise dort geschaffen, wo durch unterirdischen Rohrvortrieb eine Rohrleitung geschaffen wird. Zwischen zwei benachbarten Rohren ist dabei als Druckverteilungsschicht die Anordnung von so genannten Presshölzern vorgesehen, so dass Punktbelastungen der ggf. unebenen Stirnflächen der beiden aneinander grenzenden Rohre vermieden und die Druckbelastung beim Vortrieb großflächig verteilt werden kann.

Aus der Praxis ist es bekannt, nach Verlegung der Rohrleitung die einzelnen Rohrverbindungen von innen zusätzlich nachträglich abzudichten. Zwar kann an den Presshölzern selbst ein Dichtungsring angeordnet sein, jedoch ist es häufig vorteilhafter, einen Dichtungsring anschließend in die bereits geschaffene Rohrverbindung einzusetzen. Im Bereich der Presshölzer wird eine spaltfreie Rohrverbindung geschaffen, indem nämlich das eine Rohrende an die Presshölzer grenzt, und diese liegen wiederum dem anderen Rohrende an. Eine flüssigkeitsdichte Verbindung wird durch die Presshölzer allerdings nicht gewährleistet, insbesondere nicht je nach Einbautiefe der Rohrleitung gegen den in dieser Tiefe herrschenden Wasserdruck. Radial innerhalb der Presshölzer verbleibt daher ein Spalt zwischen den beiden Rohrenden, der eine zum Rohrinneren hin offene Innenfuge bildet.

Wenn die Rohrleitung beispielsweise in einem Bogen verlaufend erstellt wird, ergeben sich unterschiedlich große Spaltmaße der Innenfuge entlang dem Umfang der Rohrverbindung, so dass in diesen Fällen das manuelle Einbringen einer Dichtung vorteilhaft ist, da in diesen Fällen beispielsweise der Dichtungsring entlang seinem Umfang aus zwei unterschiedlichen Abschnitten mit zwei unterschiedlichen Querschnitts-Durchmessern erstellt werden kann, so dass in Anpassung an die unterschiedlichen Spaltbreiten der Innenfuge eine ausreichend dichte Anlage des Dichtungsrings an die beiden benachbarten Rohrenden sichergestellt werden kann, um auch den herrschenden Wasserdrücken entsprechend einen festen Sitz des Dichtungsrings in der Rohrverbindung gewährleisten zu können.

In Abhängigkeit von der Tiefe, in welcher die Rohrleitung verläuft, kann aufgrund der Druckverhältnisse in der Tiefe die Gefahr bestehen, dass der Dichtungsring aus der Innenfuge radial nach innen, also in den lichten Rohrquerschnitt gedrückt wird und dementsprechend seine Dichtungsfunktion nicht mehr erfüllen kann.

Aus der DE 35 12 970 A1 ist eine gattungsfremde Rohrverbindung bekannt, die einen im wesentlichen L-förmig verlaufenden Spalt zwischen den beiden Rohrenden aufweist. Ein Dichtungsring ist in dem Abschnitt des Spalts angeordnet, der im wesentlichen parallel zur Rohrlängsachse verläuft. In radialer Richtung ist der Dichtungsring nach innen und nach außen durch die beiden Rohrenden abgestützt, sodass er in diesem Abschnitt des Spalts ausschließlich annähernd in Richtung der Rohrlängsachse beweglich ist. In das Material des Dichtungsrings ist ein Verstärkungsring eingearbeitet, der den Dichtungsring gegen eine Axialverschiebung sichert, die ansonsten während der Herstellung der Rohrverbindung nicht auszuschließen wäre, wenn ein als Spitzende ausgestaltetes Rohrende in das andere, als Muffenende ausgestaltete Rohrende eingeschoben wird.

Auch aus der US 4 368 894 A, der US 2010/0 270 753 A1, und der EP 0 896 173 A2 sind Rohrverbindungen bekannt, bei denen der Dichtungsring in einem Abschnitt des Spalts angeordnet ist, der im wesentlichen parallel zur Rohrlängsachse verläuft.

Aus der GB 2 247 927 A ist eine Rohrverbindung bekannt, bei welcher die beiden Rohrenden ringsum verlaufend radial nach außen abgekantet sind. Ein Dichtungsring ist zwischen diesen beiden Rohrenden angeordnet. Ein Klemmelement mit annähernd U-förmigem Querschnitt umgreift die nach außen abgekantet Abschnitte der Rohrenden und presst diese sowie den dazwischen befindlichen Dichtungsring zusammen. Durch diesen Pressdruck in axialer Richtung kann der Dichtungsring bestrebt sein, sich radial nach außen auszudehnen. Um dies zu verhindern ist radial außen, entlang dem Umfang des Dichtungsrings, ein Stützring vorgesehen, der beispielsweise aus Metall bestehen kann.

Aus der EP 1 887 271 A1 ist eine Rohrverbindung bekannt, bei der in die beiden Stirnenden jeweils eine Axialnut eingebracht ist. Ein Dichtungsring, der zwischen den beiden Rohrenden angeordnet ist, weist einen kreuzförmigen Querschnitt auf, sodass er sich einerseits innerhalb des Spalts zwischen den beiden Rohrenden erstreckt, und andererseits in die beiden gegenüberliegenden Axialnuten der beiden Rohrenden. Die Formgebung des Dichtrings bewirkt eine lange Dichtstrecke und verbessert dadurch die Dichtwirkung.

Aus der CH 371 932 A ist eine Rohrverbindung bekannt, bei welcher ein annähernd S-förmig verlaufender Spalt zwischen den beiden Rohrenden vorgesehen ist. Ein Dichtungsbeschlag besteht aus einem ringförmigen Metallgeflecht, welches einen U-förmigen Querschnitt aufweist und mit einem klebrigen Bitumenkautschuk umhüllt ist, der an Beton klebt. Im Inneren dieses U-förmigen Querschnitts ist eine Polyethylenfolie angeordnet. Ein Kautschukkissen ist zwischen den beiden Schenkeln dieses U-förmigen Dichtungsquerschnitts angeordnet. Die Polyethylenfolie verhindert eine Verklebung des Kautschukkissens mit dem klebrigen Bitumenkautschuk. Bei der Herstellung der Rohrverbindung werden die beiden Rohrenden aneinander gepresst. Sowohl das Kautschukkissen als auch die Polyethylenfolie verhindern dabei, dass die beiden Schenkel aus klebrigem Bitumenkautschuk miteinander verklebt werden. Sie werden vielmehr mit der Betonfläche des jeweiligen Rohrendes verklebt, die dem Dichtungsbeschlag anliegt. Das Kautschukkissen verhindert, dass der Dichtungsbeschlag zu stark zusammengedrückt wird. Nach Herstellung der Rohrverbindung kann dieses Kautschukkissen entfernt werden.

Der Erfindung liegt die Aufgabe zugrunde, eine gattungsgemäße Rohrverbindung dahingehend zu verbessern, dass mit möglichst einfachen Mitteln die Dichtheit der Rohrverbindung über lange Zeit auch bei hohen einwirkenden Radialkräften sichergestellt werden kann.

Diese Aufgabe wird durch eine Rohrverbindung mit den Merkmalen des Anspruchs 1 gelöst. Vorteilhafte Ausgestaltungen sind in den Unteransprüchen beschrieben.

Die Erfindung schlägt mit anderen Worten vor, den Dichtungsring in radialer Richtung auszusteifen, indem ein Verstärkungsprofil im Profilquerschnitt des Dichtungsrings angeordnet ist. Die Dichtungsringe können aus den verschiedensten Werkstoffen bestehen, wobei nachfolgend ein elastomerer Werkstoff lediglich beispielhaft als ein in der Praxis üblicher Werkstoff genannt wird, ohne den vorliegenden Vorschlag darauf einzuschränken.

Dieses Verstärkungsprofil erstreckt sich über den gesamten Umfang des Dichtungsrings. Es kann beispielsweise vorgesehen sein, den Dichtungsring aus einem Strangpressprofil zu erstellen, was entsprechend dem gewünschten Durchmesser des Dichtungsrings abgelängt wird und woraufhin die beiden Enden dieses Strangs zusammenvulkanisiert werden, um einen geschlossenen Dichtungsring zu schaffen. Wenn bei dieser Herstellung des Dichtungsrings vorgesehen ist, beim Strangpressen des Elastomermaterials gleichzeitig auch das Verstärkungsprofil in das Elastomerprofil einlaufen zu lassen, so kann das Verstärkungsprofil beispielsweise von einer Spule abgezogen werden und gemeinsam mit dem extrudierten Elastomerprofil abgelängt werden. Wenn nun der mit dem Verstärkungsprofil versehene Elastomer-Strang zu einem geschlossenen Ring vulkanisiert wird, ist gewährleistet, dass die beiden Stirnenden des Verstärkungsprofils voreinander stehend angeordnet sind. Bei von außen auf den Dichtungsring einwirkenden Radialkräften stützen sich diese beiden Stirnenden des Verstärkungsprofils gegeneinander ab, so dass dieselbe Druckstabilität bewirkt wird wie bei einem Verstärkungsprofil, welches als geschlossener Ring ausgestaltet ist. Die radial einwirkenden Kräfte werden daher zu einem erheblichen Teil von dem Verstärkungsprofil aufgenommen, so dass der Dichtungsring gegen diese radial von außen einwirkenden Kräfte derart stabilisiert ist, dass er mit hoher Zuverlässigkeit in der Innenfuge der Rohrverbindung verbleibt und nicht in den lichten Rohrquerschnitt gedrückt wird.

Da das Verstärkungsprofil im Inneren des Profilquerschnitts des Dichtungsrings angeordnet ist, stellt der Elastomerwerkstoff des Dichtungsrings eine hervorragende chemische Barriere gegen zerstörerische Einwirkungen dar, die auf das Verstärkungsprofil einwirken könnten. Es kann daher vorteilhaft vorgesehen sein, das Verstärkungsprofil aus Stahl zu fertigen, wobei ein kostengünstiges Stahlmaterial in Form von Stahldraht mit kreisrundem Querschnitt verwendet werden kann und beispielsweise die Verwendung rostfreier Stähle nicht erforderlich ist. Alternativ zur Verwendung von Stahl kann das Verstärkungsprofil aus jedem anderen geeigneten Material bestehen, beispielsweise aus einem faserverstärkten Kunststoff wie z. B. aus einem GFK oder CFK-Material, also einem mit Glasfasern oder Carbonfasern verstärkten Kunststoff, und ebenso können abweichend von dem genannten Beispiel andere als kreisrunde Querschnittsgeometrien verwendet werden.

Insbesondere, wenn die Rohrverbindung durch zwei begehbare Rohre geschaffen wird, kann die nachträgliche Abdichtung durch Montage des Dichtungsrings manuell durchgeführt werden. Als begehbar sind Rohre bezeichnet, die beispielsweise einen Innen-Nenndurchmesser von wenigstens 800 mm aufweisen, üblicherweise sogar von wenigstens 1 m. Die nachträgliche Abdichtung kann bei kleineren Rohrdurchmessern gegebenenfalls jedoch auch maschinell vorgenommen werden.

Vorteilhaft kann das Verstärkungsprofil als geschlossener Ring ausgestaltet sein. Bei der Herstellung des Dichtungsrings kann also vorgesehen sein, zunächst das Verstärkungsprofil in das Dichtungsprofil einzubringen, die beiden Enden des Verstärkungsprofils miteinander zu verbinden, bei einem Stahlband beispielsweise die beiden Enden des Stahlbandes miteinander zu verschweißen, zu verlöten oder mittels einer Hülse zu verbinden, und erst dann die beiden Enden des z. B. aus einem Elastomerwerkstoff bestehenden Dichtungsprofils zu einem geschlossenen Ring miteinander zu verbinden, z. B. zu vulkanisieren.

Vorteilhaft kann vorgesehen sein, dass der Querschnitt des Dichtungsrings einen Hohlraum aufweist, der als Verstärkungshohlraum bezeichnet werden kann, weil er dazu dient, das Verstärkungsprofil aufzunehmen. Auf diese Weise kann in an sich bekannter Weise die Herstellung des Dichtungsprofils z. B. im Extrusionsverfahren erfolgen, ohne dass dabei das Verstärkungsprofil in den z. B. verwendeten Elastomerwerkstoff eingebracht werden muss. Vielmehr wird der Verstärkungshohlraum geschaffen, in welchen später das Verstärkungsprofil eingeschoben werden kann, bevor der Strang aus Elastomerprofil zu einem geschlossenen Dichtungsring verarbeitet wird.

Vorteilhaft kann vorgesehen sein, im Querschnitt des Dichtungsrings einen Hohlraum vorzusehen, der als Aktivierungshohlraum bezeichnet ist, weil er zu einer so genannten Aktivierung des Dichtungsrings dient. Als Aktivierung wird dabei eine Querschnittsveränderung des Dichtungsrings bezeichnet, die nach dem Einbringen des Dichtungsrings in die Innenfuge der Rohrverbindung erfolgt. Diese Aktivierung erfolgt dadurch, dass der Aktivierungshohlraum durch Einbringung eines Druckfluids unter Druck gesetzt wird. Dementsprechend weist der Aktivierungshohlraum einen Füllanschluss auf, der mit einem Füllventil versehen ist und der derart angeordnet ist, dass er vom Rohrinneren her zugänglich ist, nachdem der Dichtungsring in die Innenfuge der Rohrverbindung eingebracht worden ist. Durch diese Aktivierung des Dichtungsrings kann bewirkt werden, dass bei unterschiedlichen Spaltbreiten der Innenfuge der Dichtungsring über seinen gesamten Umfang möglichst gleichmäßig und mit möglichst hohen Presskräften den benachbarten Rohrenden anliegt und somit die gewünschte Dichtungswirkung sicherstellt. Vorteilhaft kann hier die Verwendung eines Druckfluids sein, welches nach der Befüllung des Aktivierungshohlraumes aushärtet. Als Fluid ist dabei im Sinne des vorliegenden Vorschlags außer einem gasförmigen oder flüssigen Material auch ein fließfähiges Material bzw. eine fließfähige Materialmischung bezeichnet, die auch Feststoffteile enthalten kann, so dass jedenfalls dieses Material in den Aktivierungshohlraum eingebracht, z. B. gepumpt werden kann, sich dort verteilen und ggf. aushärten kann.

Der gesamte Dichtungsring wird folglich zumindest aus dembeispielsweise elastomeren - Dichtprofil sowie aus dem Verstärkungsprofil gebildet, und ggf. zusätzlich auch aus dem in das Dichtprofil eingebrachten und ggf. erstarrten Druckfluid.

Vorteilhaft kann vorgesehen sein, dass der Querschnitt des Dichtungsrings einen Hohlraum aufweist, der als so genannter Ausgleichshohlraum bezeichnet ist. Beim Einbringen des Dichtungsrings in die Innenfuge, oder einer ggf. anschließend vorgesehenen Aktivierung des Dichtungsrings wird dieser Ausgleichs- hohlraum zusammengepresst, so dass die Kompressionskräfte des verpressten Dichtprofils aufgenommen und gespeichert werden. Sollten sich später aufgrund von Setzbewegungen oder anderweitigen Bewegungen des jeweiligen Rohres Relativbewegungen zwischen den beiden an der Rohrverbindung beteiligten Rohren ergeben, so ermöglicht der Ausgleichshohlraum dadurch, dass er sich aus seinem komprimierten Zustand wieder teilweise dekomprimiert, eine Nachführung der Dichtungsoberfläche, so dass diese nach wie vor der Oberfläche des Rohrendes abdichtend anliegt. Auf diese Weise wird mittels des Ausgleichshohlraum das Ausgleichen gewisser Relativbewegungen zwischen den beiden an der Rohrverbindung beteiligten Rohren ermöglicht.

Dabei kann vorteilhaft vorgesehen sein, dass auf beiden Seiten des Dichtungsrings, nämlich zu den Rohrenden beider Rohre hin, jeweils mehrere derartige Ausgleichshohlräume vorgesehen sind die sich in Größe und Form unterscheiden. Hohlräume mit einem länglichen Querschnitt, bei denen die Umfangslinie des Hohlraumquerschnitts vom Mittelpunkt des Hohlraumquerschnitts stark unterschiedlich große Abstände aufweist, nehmen bei der Aktivierung eine vergleichsweise größere Dehnung auf. Die im Vergleich dazu eher rund ausgebildeten Hohlräume, bei denen die Abstände der Umfangslinie des Hohlraumquerschnitts vom Mittelpunkt des Hohlraumquerschnitts weniger stark unterschiedlich groß sind, werden demgegenüber erst später verpresst. Somit wird sichergestellt, dass auch bei großen Fugenspaltweiten und den damit verbundenen Dehnungen im Profil noch Verformungsenergie aufgenommen werden kann, welche zum größten Teil der Abdichtungsaufgabe zugute kommt.

Vorteilhaft kann vorgesehen sein, dass der Dichtungsring nicht nur ein Verstärkungsprofil aufweist, sondern zwei Verstärkungsbänder, wobei diese in radialer Richtung im Profilquerschnitt des Dichtungsrings voneinander beabstandet verlaufen. Hierdurch wird nicht nur der grundsätzliche Effekt verbessert und verstärkt, den ein Verstärkungsprofil aufweist, sondern insbesondere, wenn ein Aktivierungshohlraum zwischen diesen beiden Verstärkungsbändern vorgesehen ist, kann durch das radial äußere Verstärkungsprofil sichergestellt werden, dass beim Aktivieren des Dichtungsrings der im Aktivierungshohlraum aufgebaute Druck nicht dazu führt, dass sich der Dichtungsring radial nach außen ausdehnt, sondern dass dieser nach außen wirkende Druck vielmehr durch das radial äußere Verstärkungsprofil aufgefangen wird, so dass der Aktivierungsdruck vielmehr zu einem höheren Anpressdruck des Dichtungsrings an die beiden benachbarten Rohrenden führt und somit zu einer verbesserten Dichtungswirkung. Dies gilt insbesondere, wenn das radial äußere Verstärkungsprofil als geschlossener Ring ausgestaltet ist, welches dementsprechend große radial von innen nach außen wirkende Kräfte aufzunehmen in der Lage ist.

In vielen Fällen ist vorgesehen, dass das Material eines Rohrs durch eine innere Auskleidung vor aggressiven Medien geschützt ist. Diese als Inliner bezeichnete Auskleidung kann vorteilhaft in das Dichtungskonzept einbezogen werden. Sollte beispielsweise das Rohrmaterial einen Riss aufweisen, so könnte Wasser radial von außen durch diesen Riss bis an die Grenzschicht zwischen dem Rohrmaterial und dem Inliner gelangen und dann ggf. am Inliner entlang bis zur Rohrverbindung gelangen. Daher kann vorteilhaft vorgesehen sein, dass der Dichtungsring sich in radialer Richtung über diese Grenze zwischen Rohrmaterial und Inliner erstreckt und zwar derart, dass der Dichtungsring mit seinen dichtungswirksamen Flächen sowohl dem Rohrmaterial als auch dem Inliner abdichtend anliegt. Auf diese Weise wird vermieden, dass das wie beschrieben entlang dem Inliner bis zur Rohrverbindung gelangte Wasser im Bereich der Innenfuge der Rohrverbindung ins Rohrinnere gelangen kann.

Vorteilhaft kann vorgesehen sein, dass unabhängig davon, ob der Dichtungsring aktiviert werden kann oder nicht, eine ortsfeste Fixierung des Dichtungsrings dadurch unterstützt wird, dass die benachbarten Rohrenden jeweils mit einer Ausnehmung versehen sind, in welcher der Dichtungsring formschlüssig aufgenommen ist. Es kann also vorgesehen sein, dass der Dichtungsring vom Rohrinneren her in die Innenfuge eingeführt wird und unter Überwindung einer Engstelle bis in den Bereich geführt wird, indem die beiden gegenüberliegenden Ausnehmungen der beiden benachbarten Rohrenden vorgesehen sind. Insbesondere kann dann vorgesehen sein, einen aktivierbaren Dichtungsring zu aktivieren, also seinen Profilquerschnitt zu vergrößern und mit einem hohen Anpressdruck den Dichtungsring an die beiden benachbarten Rohrenden anzulegen.

Ausführungsbeispiele der Erfindung werden anhand der rein schematischen Darstellungen nachfolgend näher erläutert. Dabei zeigt
- Fig. 1: ein erstes Ausführungsbeispiel einer Rohrverbindung mit einem ersten Ausführungsbeispiel eines Dichtungsrings,
- Fig. 2: dasselbe erste Ausführungsbeispiel einer Rohrverbindung, allerdings mit einem zweiten Ausführungsbeispiel eines Dichtungsrings, und
- Fig. 3: ein zweites Ausführungsbeispiel einer Rohrverbindung unter Verwendung des Dichtungsrings von Fig. 1.

In den Zeichnungen ist jeweils mit 1 insgesamt eine Rohrverbindung bezeichnet, wobei von zwei benachbarten Rohren 2 lediglich ein Ausschnitt der Rohrwandungen dargestellt ist, und zwar jeweils der zum Rohrinneren hin endende Bereich der beiden Rohrwandungen. Die Zeichnungen zeigen jeweils einen Schnitt, der in Längsrichtung der Rohre 2 durch deren Scheitelpunkt verläuft. Die beiden Rohre 2 überlappen sich in Art eines Muffenendes und eines darin eingesteckten Spitzendes, wobei die Darstellungen lediglich ausschnittsweise von der jeweiligen Rohrverbindung 1 den Bereich darstellen, wo eine Innenfuge 3 ins Rohrinnere mündet. Radial weiter außerhalb von der Innenfuge 3 können beispielsweise Presshölzer vorgesehen sein, wenn es sich bei der Rohrverbindung 1 um die Verbindung zweier unterirdisch vorgetriebener Rohre 2 handelt.

In der Innenfuge 3 ist jeweils ein Dichtungsring 4 angeordnet, der mehrere unterschiedliche Hohlräume aufweist: In einem Verstärkungshohlraum 5 ist ein Verstärkungsprofil 6 vorgesehen, welches aus einem Rundstahl besteht. Dabei ist rein beispielhaft vorgesehen, einen Federstahl für das Verstärkungsprofil 6 zu verwenden und diesen Federstahl mit seinen beiden Enden zu einem geschlossenen Ring zu verschweißen. Durch die Elastizität dieses Federstahlmaterials kann ein geschlossener Dichtungsring 4 zu einem deutlich kleineren Durchmesser zusammengeschlagen werden, so dass der Dichtungsring 4 zunächst problemlos in die Rohrleitung eingebracht und in die Nähe der Rohrverbindung 1 verbracht werden kann. Dort wird der zusammengefaltete Dichtungsring 4 wieder auseinander geschlagen und weist nun einen Durchmesser auf, der größer ist als der lichte Innendurchmesser der Rohrleitung. Anschließend wird der Dichtungsring 4 in die Innenfuge 3, wie aus den Zeichnungen ersichtlich, eingebracht.

Zusätzlich zu dem Verstärkungshohlraum 5 weist der Dichtungsring 4 einen Aktivierungshohlraum 7 auf, der über einen aus den Zeichnungen nicht ersichtlichen Füllanschluss mit einem Füllventil in Verbindung steht, welches radial nach innen ragt, so dass es nach dem Einbringen des Dichtungsrings 4 in die Innenfuge 3 vom Rohrinneren her zugänglich ist. Über dieses Füllventil kann der Aktivierungshohlraum 7 mit einem Druckfluid beschickt werden, so dass der Aktivierungshohlraum 7 seine Querschnittsabmessungen vergrößert und damit auch der Anpressdruck des Dichtungsrings 4 an die beiden benachbarten Rohre 2 zu Gunsten einer verbesserten Abdichtung vergrößert werden kann.

Den Dichtflächen der beiden Rohre 2 benachbart sind im Dichtungsring 4 weiterhin Ausgleichshohlräume 8a und 8b angeordnet. Die Hohlräume 8a mit länglichem Querschnitt nehmen bei der Aktivierung eine größere Dehnung auf, sodass die Hohlräume 8b, die einen eher rundlichen Querschnitt aufweisen, erst später verpresst werden. Somit wird sichergestellt, dass auch bei großen Fugenspaltweiten und den damit verbundenen Dehnungen im Dichtungsring 4 noch Verformungsenergie aufgenommen werden kann, welche zum größten Teil der Abdichtungsaufgabe zugute kommt und auch bei eventuellen Relativbewegungen zwischen den beiden Rohren 2 ein weiterhin dichtes Anliegen des Dichtungsrings 4 an den beiden Rohren 2 gegeben ist.

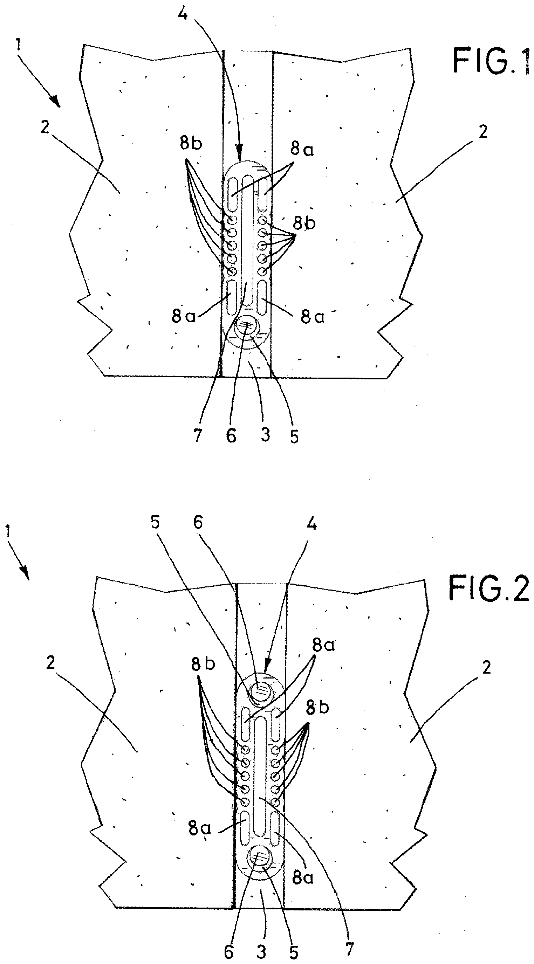

In Fig. 2 ist ein Dichtungsring 4 dargestellt, der an seinen beiden radialen innen und äußeren Enden jeweils einen Verstärkungshohlraum 5 mit darin angeordnetem Verstärkungsprofil 6 aufweist. Die Verstärkungshohlräume 5 sind größer als der Querschnitt des jeweiligen Verstärkungsprofils 6, so dass zunächst in an sich bekannter Weise der Dichtungsring 4 aus einem Dichtungsprofilstrang hergestellt werden kann, z. B. indem ein Elastomerwerkstoff extrudiert wird, und anschließend in die Verstärkungshohlräume 5 die Verstärkungsbänder 6 eingebracht werden können.

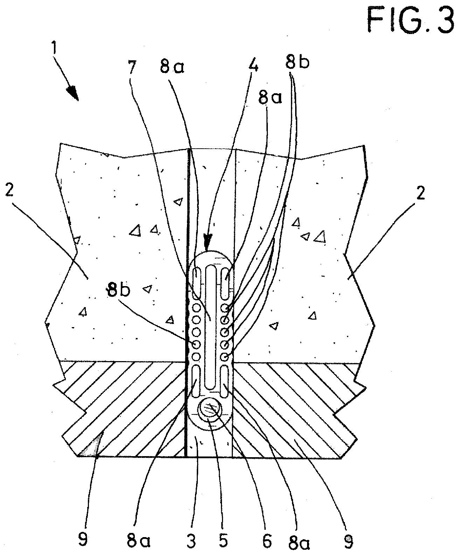

Fig. 3 zeigt ein zweites Ausführungsbeispiel einer Rohrverbindung 1, wobei die beiden Rohre 2 auf der Rohrinnenseite jeweils mit einem so genannten Inliner 9 versehen sind, also mit einer Rohrauskleidung aus beispielsweise einem faserverstärkten Kunststoffmaterial, welcher den beispielsweise mineralischen Werkstoff der Rohre 2 vor chemischen Angriffen schützt. Bei dieser Rohrverbindung 1 ist die Verwendung eines Dichtungsrings 4 vorgesehen, wie er auch in Fig. 1 dargestellt ist. Dabei ist ersichtlich, dass sich der Dichtungsring 4 mit seinen dicht wirksamen Flächen über die Grenze hinweg erstreckt, die zwischen dem eigentlichen Rohrwerkstoff und dem Inliner 9 vorgesehen ist.

## Patentansprüche

1. Rohrverbindung zweier Rohre (2), wobei zwischen den beiden benachbarten Rohrenden eine sich in radialer Richtung erstreckende,
zum Rohrinneren offene,
als Innenfuge (3) bezeichnete Fuge vorgesehen ist, sowie ein Dichtungsring (4), der an den beiden benachbarten Rohrenden anliegt, wobei der Dichtungsring (4) in seinem Profilquerschnitt ein den Dichtungsring (4) gegen radial auf den Dichtungsring (4) einwirkende Kräfte stabilisierendes Verstärkungsprofil (6) aufweist, welches sich über den gesamten Umfang des Dichtungsrings (4) erstreckt, **dadurch gekennzeichnet, dass** der Dichtungsring (4) in der Innenfuge (3) angeordnet und radial nach außen und nach innen in der Innenfuge (3) beweglich ist.

2. Rohrverbindung nach Anspruch 1,
**dadurch gekennzeichnet,**
**dass** das Verstärkungsprofil (6) aus Stahl besteht.

3. Rohrverbindung nach Anspruch 1 oder 2,
**dadurch gekennzeichnet,**
**dass** das Verstärkungsprofil (6) als geschlossener Ring ausgestaltet ist.

4. Rohrverbindung nach einem der vorhergehenden Ansprüche,
**dadurch gekennzeichnet,**
**dass** der Querschnitt des Dichtungsrings (4) einen Hohlraum aufweist, der als Verstärkungshohlraum (5) bezeichnet ist und in dem das Verstärkungsprofil (6) verläuft.

5. Rohrverbindung nach einem der vorhergehenden Ansprüche,
**dadurch gekennzeichnet,**
**dass** der Querschnitt des Dichtungsrings (4) einen Hohlraum aufweist, der als Aktivierungshohlraum (7) bezeichnet ist und der einen Füllanschluss aufweist,
wobei der Füllanschluss mittels eines Füllventils eine Beschickung des Aktivierungshohlraums (7) mit einem Druckfluid ermöglichend ausgestaltet ist und radial von innen zugänglich ist, derart, dass der in der Innenfuge (3) befindliche Dichtungsring (4) mit dem Druckfluid befüllbar ist.

6. Rohrverbindung nach einem der vorhergehenden Ansprüche,
**dadurch gekennzeichnet,**
**dass** der Querschnitt des Dichtungsrings (4) einen Hohlraum aufweist, der als Ausgleichshohlraum (8) bezeichnet ist und einem Rohrende benachbart im Dichtungsring (4) vorgesehen ist.

7. Rohrverbindung nach Anspruch 6,
**dadurch gekennzeichnet,**
**dass** auf beiden Seiten des Dichtungsrings (4), zu beiden Rohrenden hin, jeweils mehrere Ausgleichshohlräume (8) vorgesehen sind.

8. Rohrverbindung nach einem der vorhergehenden Ansprüche,
**dadurch gekennzeichnet,**
**dass** der Dichtungsring (4) in seinem Profilquerschnitt zwei radial voneinander beabstandete Verstärkungsprofile (6) aufweist, welche sich jeweils über den gesamten Umfang des Dichtungsrings (4) erstrecken.

9. Rohrverbindung nach einem der vorhergehenden Ansprüche,
**dadurch gekennzeichnet,**
**dass** die beiden Rohre (2) jeweils eine als Inliner (9) bezeichnete Rohrauskleidung aufweisen,
und **dass** der Dichtungsring (4) sich in radialer Richtung über die Grenze zwischen Rohrmaterial und Inliner (9) erstreckend angeordnet ist,
derart, dass er sowohl dem Rohrmaterial als auch dem Inliner (9) abdichtend anliegt.

10. Rohrverbindung nach einem der vorhergehenden Ansprüche,
**dadurch gekennzeichnet,**
**dass** die benachbarten Rohrenden jeweils mit einer Ausnehmung versehen sind, in welcher der Dichtungsring (4) formschlüssig aufgenommen ist.

11. Rohrverbindung nach einem der vorhergehenden Ansprüche,
**dadurch gekennzeichnet,**
**dass** die Rohrverbindung durch zwei begehbare Rohre mit einem Innen-Nenndurchmesser von wenigstens 1 m gebildet ist.

12. Rohrverbindung nach einem der vorhergehenden Ansprüche,
**gekennzeichnet durch**
ein Elastomer als Werkstoff für das Grundmaterial des Dichtungsrings (4).

## Claims

1. Pipe connection of two pipes (2), where a joint, referred to as an inner joint (3), extending in the radial direction and open towards the inside of the pipe is provided between the two adjacent pipe ends, and a sealing ring (4) which lies against the two adjacent pipe ends,
where the sealing ring (4) has a reinforcing profile (6) in its profile cross section to stabilise the sealing ring (4) against the radial forces acting on the sealing ring (4), which reinforcing profile extends around the entire circumference of the sealing ring (4),
**characterised in that** the sealing ring (4) is arranged in the inner joint (3) and can be moved radially outwards and inwards within the inner joint (3).

2. Pipe connection in accordance with claim 1, **characterised in that** the reinforcing profile (6) consists of steel.

3. Pipe connection in accordance with claim 1 or claim 2, **characterised in that** the reinforcing profile (6) is shaped as a closed ring.

4. Pipe connection in accordance with any of the preceding claims, **characterised in that** the cross section of the sealing ring (4) has a cavity, referred to as a reinforcing cavity (5), in which the reinforcing profile (6) runs.

5. Pipe connection in accordance with any of the preceding claims, **characterised in that** the cross-section of the sealing ring (4) has a cavity which is referred to as the activation cavity (7) and which has a filling connection,
where the filling connection, by means of a filling valve, is designed to allow the activation cavity (7) to be filled with a pressurising fluid and is accessible radially from the inside in such a way that the sealing ring (4) located in the inner joint (3) can be filled with the pressurising fluid.

6. Pipe connection in accordance with any of the preceding claims, **characterised in that** the cross-section of the sealing ring (4) has a cavity, which is referred to as the compensating cavity (8) and is located inside the sealing ring (4) adjacent to an end of the pipe.

7. Pipe connection in accordance with claim 6, **characterised in that** several compensating cavities (8) are provided on either side of the sealing ring (4) towards either end of the pipe.

8. Pipe connection in accordance with any of the preceding claims, **characterised in that** the sealing ring (4) has two reinforcing profiles (6) at a radial distance from one another inside its profile cross-section, each of which extends over the entire circumference of the sealing ring (4).

9. Pipe connection in accordance with any of the preceding claims, **characterised in that** each of the two pipes (2) has a lining, referred to as the inliner (9), and that the sealing ring (4) extends in the radial direction over the border between the pipe material and the inliner (9) in such a way that it lies against both the pipe material and the inliner (9) thus forming a seal.

10. Pipe connection in accordance with any of the preceding claims, **characterised in that** each of the adjacent ends of the pipe has a recess into which the sealing ring (4) fits positively.

11. Pipe connection in accordance with any of the preceding claims, **characterised in that** the pipe connection is formed by two pipes with a nominal inner diameter of at least 1 metre which are accessible to persons.

12. Pipe connection in accordance with any of the preceding claims, **characterised in that** the base material of the sealing ring (4) is an elastomer.

## Revendications

1. Jonction de deux tuyaux (2), sachant qu'entre les deux extrémités voisines est prévu un joint appelé joint intérieur (3) s'étendant en direction radiale, ouvert vers l'intérieur du tuyau, ainsi qu'une bague d'étanchéité (4) qui applique contre les deux extrémités de tuyaux voisines,
sachant que la bague d'étanchéité (4) présente, dans sa section profilée, un profilé de renforcement (6) stabilisant la bague d'étanchéité (4) contre les forces agissant radialement sur la bague d'étanchéité (4), profilé de renforcement qui s'étend sur toute la circonférence de la bague d'étanchéité (4),
**caractérisée en ce que** la bague d'étanchéité (4) est agencée dans le joint intérieur (3) et déplaçable radialement vers l'extérieur et l'intérieur dans le joint intérieur (3).

2. Jonction de tuyaux selon la revendication 1, **caractérisée en ce que** le profilé de renforcement (6) est en acier.

3. Jonction de tuyaux selon la revendication 1 ou 2, **caractérisée en ce que** le profilé de renforcement (6) est configuré en bague fermée.

4. Jonction de tuyaux selon l'une des revendications précédentes, **caractérisée en ce que** la section de la bague d'étanchéité (4) présente une cavité appelée cavité de renforcement (5) et dans laquelle circule le profilé de renforcement (6).

5. Jonction de tuyaux selon l'une des revendications précédentes, **caractérisée en ce que** la section de la bague d'étanchéité (4) présente une cavité appelée cavité d'activation (7) et qui présente un raccord de remplissage, sachant que le raccord de remplissage est équipé d'une valve de remplissage permettant de remplir la cavité d'activation (7) avec un fluide sous pression et est accessible radialement de l'intérieur, de sorte que la bague d'étanchéité (4) présente dans le joint intérieur (3) peut être remplie de fluide sous pression.

6. Jonction de tuyaux selon l'une des revendications précédentes, **caractérisée en ce que** la section de la bague d'étanchéité (4) présente une cavité appelée cavité d'équilibrage (8) et qu'est prévue une bague d'étanchéité (4) au voisinage d'une extrémité de tuyau.

7. Jonction de tuyaux selon la revendication 6, **caractérisée en ce que** sont prévues respectivement, sur les deux côtés de la bague d'étanchéité (4), en direction des deux extrémités de tuyau, plusieurs cavités d'équilibrage (8).

8. Jonction de tuyaux selon l'une des revendications précédentes, **caractérisée en ce que** la bague d'étanchéité (4) présente dans sa section profilée deux profilés de renforcement (6) situés à une certaine distance radiale l'un de l'autre, qui s'étendent respectivement sur toute la circonférence de la bague d'étanchéité (4).

9. Jonction de tuyaux selon l'une des revendications précédentes, **caractérisée en ce que** les deux tuyaux (2) présentent un chemisage intérieur appelé inliner (9) et **en ce que** la bague d'étanchéité (4) est agencée s'étendant en direction radiale en dépassant la limite entre le matériau du tuyau et l'inliner (9) de sorte qu'elle applique contre aussi bien le matériau du tuyau que contre l'inliner (9) en les étanchéisant.

10. Jonction de tuyaux selon l'une des revendications précédentes, **caractérisée en ce que** les extrémités de tuyaux voisines sont dotées chacune d'un évidement dans lequel la bague d'étanchéité (4) est logée et retenue par adhérence de formes.

11. Jonction de tuyaux selon l'une des revendications précédentes, **caractérisée en ce que** la jonction de tuyaux est formée par deux tuyaux accessibles présentant un diamètre intérieur d'au moins 1 mètre.

12. Jonction de tuyau selon l'une des revendications précédentes, **caractérisée par** un élastomère officiant de matériau entrant dans le matériau de base de la bague d'étanchéité (4).
